# EUROPÄISCHE PATENTSCHRIFT

(11) **EP 3 581 884 B1**
(45) Veröffentlichungstag und Bekanntmachung des Hinweises auf die Patenterteilung: **27.08.2025**
(21) Anmeldenummer: 18178024.8
(22) Anmeldetag: 15.06.2018
(51) Int. Cl.: G01B 11/25, G01B 11/30, B22F 12/90, B29C 64/393, B29C 64/20, B33Y 50/02, B33Y 30/00, G01N 21/00

(54) **ADDITIVE FERTIGUNG MIT OPTISCHER PROZESSÜBERWACHUNG**
ADDITIVE MANUFACTURING WITH OPTICAL PROCESS MONITORING
FABRICATION ADDITIVE AVEC SURVEILLANCE DU PROCÉDÉ PAR MESURE OPTIQUE

(43) Veröffentlichungstag der Anmeldung: 18.12.2019
(73) Patentinhaber: Hexagon Technology Center GmbH, 9435 Heerbrugg (CH)
(72) Erfinder: JENSEN, Thomas, CH-9400 Rorschach (CH); YANG, Zheng, D-88046 Friedrichshafen (DE); STIGWALL, Johan, CH-9008 St. Gallen (CH)
(74) Vertreter: Kaminski Harmann

(56) Entgegenhaltungen:
- WO-A1-2017/085468
- CN-A- 107 727 011
- US-A1- 2015 024 233
- US-A1- 2016 236 279
- WILLIAM S. LAND ET AL: "In-Situ Metrology System for Laser Powder Bed Fusion Additive Process", PROCEDIA MANUFACTURING, vol. 1, 1 January 2015 (2015-01-01), pages 393 - 403, XP055304397, ISSN: 2351-9789, DOI: 10.1016/j.promfg.2015.09.047
- BIN ZHANG ET AL: "In situ surface topography of laser powder bed fusion using fringe projection", ADDITIVE MANUFACTURING,, vol. 12, no. Pt. A, 30 September 2016 (2016-09-30), pages 100 - 107, XP009508030, ISSN: 2214-8604, [retrieved on 20160816], DOI: 10.1016/J.ADDMA.2016.08.001

## Beschreibung

Die Erfindung betrifft ein Verfahren zum Prüfen der Herstellung eines Objekts mittels additiver Fertigung sowie eine entsprechende Vorrichtung.

In vielen technischen Anwendungsbereichen besteht das Bedürfnis, Objekte mit hoher Genauigkeit oder bezüglich deren Zusammensetzung zu vermessen. Dieses gilt insbesondere für die fertigende Industrie, für die das Vermessen und Überprüfen von Oberflächen von Werkstücken hohe Bedeutung, insbesondere auch zu Zwecken der Qualitätskontrolle, hat.

Für solche Anwendungen werden beispielsweise Koordinatenmessmaschinen eingesetzt, welche eine präzise Vermessung der Geometrie einer Objektoberfläche, typischerweise mit Mikrometer-Genauigkeit, ermöglichen. Zu vermessende Objekte können beispielsweise Motorblöcke, Getriebe und Werkzeuge sein. Bekannte Koordinatenmessmaschinen vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in der US 5,402,582 oder der EP 1 474 650 beschrieben.

Die koordinative Oberflächenvermessung erlaubt das Feststellen von geometrischen Abweichungen am Werkstück von entsprechenden Sollwerten. Diesbezüglich kann damit eine hochgenaue Angabe zur Fertigungspräzision gemacht werden. Es kann also festgestellt werden ob Form und Dimensionierung des produzierten Teils innerhalb einer vorgegebenen Toleranz liegen und das Bauteil als Ausschuss oder Gutteil anzusehen ist.

Die geometrische Betrachtung insbesondere der Objektoberfläche lässt naturgemäss und typischerweise die Beschaffenheit des Objekts in dessen Körperinnerem ausser Acht. Informationen bezüglich möglicher Materialfehler oder Materialbrüche bleiben unzugänglich.

Jedoch gewinnen solche Objekteigenschaften, die nicht mehr allein die Geometrie des Werkstücks betreffen, durch die Weiterentwicklung bestimmter Fertigungsverfahren weiter an Bedeutung. Abseits traditioneller Fertigungsmethoden wie Fräsen, Schleifen, Polieren, Schweissen oder Löten ist hier insbesondere die additive Fertigung oder der 3D-Druck zu nennen. Standen für zerspanende Materialbearbeitungen bislang Toleranzen bezüglich des Materialabtrags als zu beachtende Grössen im Vordergrund, sind die relevanten Parameter bei einer additiven Fertigung für gewöhnlich andere.

Die additive Fertigung, oft auch als 3D-Druck bezeichnet, unterscheidet sich von den genannten klassischen Zerspanungstechniken dadurch, dass das Fertigungsmaterial mehrheitlich nicht sukzessive abgetragen wird, sondern das zu bildende Objekt schichtweise aufgebaut wird. Es wird beispielsweise Materialschicht über Materialschicht aufgetragen und die jeweiligen Schichten werden z.B. durch lokales Aufschmelzen oder Sintern partiell verfestigt und in einen finalen Materialzustand überführt. Das Ausgangsmaterial kann hierbei in loser Pulverform oder viskos vorliegen.

Zur Überwachung eines derartigen Produktionsprozesses schlagen Bin Zhang et al in "In situ surface topography of laser powder bed fusion using fringe projection", Additive Manufacturing, 12 (2016), Seiten 100-107, vor, einen Projektor zusammen mit einer Kamera derart mit einer Fertigungskammer zu koppeln, dass Triangulationsdaten bezüglich der Produktionsfläche erzeugt und damit jeweils gesinterte Metalllagen metrologisch erfasst werden können. Einen ähnlichen Ansatz verfolgen William S. Land II et al. in "In-Situ Metrology System for Laser Powder Bed Fusion Additive Process" Procedia Manufacturing, Volume 1, 2015, Pages 393-403.

Weitere Systeme und Methoden zur Überwachung einer additiven Fertigung sind in den folgenden Dokumenten offengelegt: CN 107 727 011 A, US 2016/236279 A1, US 2015/024233 A1, WO 2017/085468 A1.

Durch den schichtweisen Aufbau von Werkstücken bei additivem Fertigen ergeben sich neben der klassischen Einhaltung von geometrischen Fertigungstoleranzen weitere kritische Fertigungseigenheiten. Hierbei treten vermehrt innere Objekteigenschaften in den Vordergrund. In anderen Worten bedeutet dies, dass für das additive Fertigen insbesondere sichergestellt werden muss, dass die Materialbeschaffenheit im Körperinneren einer Sollvorgabe entspricht, d.h. entsprechend der jeweiligen Fertigungsmethode auch im Inneren wie gewünscht verfestigt ist. Zudem sind unerwünschte Materialspannungen, Risse oder Lufteinschlüsse in einem fertigen Objekt zu vermeiden. Hinzu kommt, dass mit obigen Fertigungsmethoden oftmals bereits eine Echtzeitüberwachung (in-process) des Fertigungsprozesses gewünscht sein kann, um mögliche Abweichungen bereits während der Fertigung feststellen zu können.

Für die Erfassung solcher Effekte sind heutige Standardmessgeräte wie eine Koordinatenmessmaschine nicht ausreichend umfangreich ausgestattet oder passend ausgelegt. Zwar können damit oberflächliche Abweichungen wie Risse oder Deformationen erfasst werden, jedoch sind mögliche Fehlstellen im Körperinneren regelmässig nicht messbar. Eine Messung während der Fertigung, **d.h.** typischerweise an einem Material, das noch nicht den finalen Materialzustand erreicht hat, ist zudem nicht verlässlich durchführbar.

Es ist daher Aufgabe der vorliegenden Erfindung eine Methode und eine entsprechende Vorrichtung anzugeben, die eine verbesserte Objektprüfung eines mittels additiver Fertigung zu fertigendem Objekts bereitstellt.

Insbesondere ist es Aufgabe der Erfindung ein additiv gefertigtes Objekt hinsichtlich einer strukturellen Integrität prüfbar zu machen.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Erfindungsgemäss wird die Kombination einer optischen Überwachungsanordnung mit einer Einheit zur additiven Fertigung von Objekten, insbesondere mit einem 3D-Drucker, vorgeschlagen. Die optische Überwachungsanordnung wird dabei insbesondere als ein nach dem Messprinzip der Triangulation arbeitender Scanner vorgeschlagen. Ein solcher Scanner weist dabei zwei Kameras mit einer festen und bekannten Positionsrelation zu einer ebenfalls vorgesehenen Projektionseinheit auf.

Die Messinformation soll dabei für das Innere eines Fertigungsvolumens generiert werden. Im Speziellen soll die mit dem Scanner erzeugbare Information einen Bezug zum zu fertigenden Objekt bzw. zu dem Rohstoff, aus welchem das Objekt gefertigt werden soll, aufweisen. Die optische Überwachungsanordnung ist hierfür erfindungsgemäß ausserhalb des Fertigungsvolumens vorgesehen. Ist das Fertigungsvolumen als eine geschlossene Kammer ausgebildet so können z.B. Sichtfenster in dem Gehäuse zur Strahltransmission vorgesehen sein, d.h. beispielsweise für eine Projektion von Messstrahlung in das Innere der Kammer und für ein Erfassen von Licht aus der Kammer mittels der Kameras.

Der Scanner ist derart konfiguriert und angeordnet, dass die damit erzeugbare Messinformation bezüglich einer Fertigungsfläche der Fertigungseinheit erzeugbar ist. Bei der Verwendung eines 3D-Druckers, der dazu eingerichtet ist aus einem Pulverbett heraus ein Objekt zu erstellen, kann die Messinformation bezüglich des Pulverbetts erzeugbar sein. Hierbei ist für die Überwachung der Produktion beispielsweise von Interesse, welchen Zustand das Pulverbett aufweiset, also ob das Pulverbett beispielsweise ausreichend flach ist oder ob die Grösse der Pulverpartikel den gewünschten Anforderungen entspricht. Die Überwachungsanordnung kann einerseits während dem Aufbau eines Objekts zum Monitoring oder Anpassung des Prozesses und andererseits können die gespeicherten und analysierten Daten nach Fertigstellung des Objekts zur Qualitätskontrolle eingesetzt werden.

Während des Aufbaus des Objekts sind insbesondere die mittlere Schichtdicke des aufgetragenen Materials sowie deren Variation über den Auftragungsbereich von Interesse als Rückmeldung für die Vorrichtung, um z.B. die Leistung des Schreiblasers zu regeln. Die Schichtdicke lässt sich ermitteln als Differenz aus zwei gemessenen 3D-Oberflächen, insbesondere unter Berücksichtigung der Absenkung des Schreibbereiches zwischen zwei Materialauftragungen. Eine Messung der Schichtdicken ist mit dem optischen Prüfsystem gemäss der Erfindung möglich.

Neben der Schichtdicke des Materialauftrags (Pulver) ist auch der Geometriezuwachs der geschriebenen Objekte für eine Rückmeldung während des Verfahrens messbar, um hier ggf. korrigierend einzugreifen.

Die Objektbereiche können durch eine stärkere Höhenabsenkung des aufgeschmolzenen Materials gegenüber dem umliegenden Pulver mit Lufteinschlüssen identifiziert werden. Auch ist zu erwarten, dass sich die Reflektionseigenschaften der Objektbereiche von den Pulverbereichen unterscheiden. Auch die Rauheit der Oberfläche des Objekts unterscheidet sich gegenüber der des Pulvers, und erlaubt damit ebenfalls eine Identifizierung der Objektbereiche. D.h. aus den 3D-Daten zusammen mit den Intensitätswerten der Kamerabilder (maximaler Intensitätswert pro Pixel beim Phasenschieben oder eine separate Hellaufnahme) sind die Bildbereiche bestimmbar, die dem Objekt zuzuordnen sind.

Kommt es zu einer Lageabweichung der gemessenen Objektgeometrien während des Verfahrens ist bei Erkennung einer Überschreitung von definierten Toleranzen eine Korrektur der Schreibposition oder auch ein Abbruch des Prozesses realisierbar.

Die Erfindung betrifft also ein System zur überwachbaren additiven Fertigung eines Objekts, mit einer Fertigungseinheit, die zur additiven Fertigung des Objekts basierend auf metallhaltigem Fertigungsmaterial, insbesondere pulver-, granulat- und/oder drahtförmigem Fertigungsmaterial, in einem Fertigungsvolumen ausgebildet ist, insbesondere einem 3D-Drucker.

Das Objekt kann in einem Fertigungszyklus mittels wiederholtem schichtweisem Bereitstellen des metallhaltigen Fertigungsmaterials in definierter Menge, und zumindest partiellem, positionsgenauem Umformen des bereitgestellten Fertigungsmaterials, insbesondere durch partielles Aufschmelzen des Fertigungsmaterials, aufgebaut werden.

Das schichtweise Bereitstellen des Materials ist dabei im Allgemeinen so zu verstehen, dass das Fertigungsmaterial für die aktuell zu produzierende (Einzel-)Schicht bzw. Lage des Objekts bereitgestellt wird. So kann das Fertigungsmaterial z.B. in Form eines Materialfadens entlang der schichtbezogenen Objektkontur bereitgehalten und/oder geführt werden. Insbesondere aber nicht ausschliesslich kann unter dem schichtweisen Bereitstellen ein Bereitstellen des Materials in Form einer flächigen Schicht oder Ebene (definierter Dicke) verstanden werden (z.B. Pulverbett).

Das System weist ferner eine optische Prüfeinheit mit mindestens einem Projektor, einer ersten und einer zweiten Kamera auf. Zudem ist eine Steuerungs- und Verarbeitungseinheit vorgesehen, die zumindest zur Steuerung der Fertigungseinheit ausgebildet ist.

Das Fertigungsvolumen ist erfindungsgemäß thermisch isoliert ausgebildet und weist mindestens einen optischen Transmissionsbereich (z.B. Sichtfenster) auf. Der Transmissionsbereich ist derart ausgebildet, dass Licht, das mit dem Projektor erzeugbar ist, den Transmissionsbereich durchdringt und ebenso Licht bzw. Reflexionen, die in dem Fertigungsvolumen aufgrund der Projektion erzeugt sind, durch solch einen Bereich transmittieren können. In anderen Worten weist der Transmissionsbereich eine Durchlässigkeit für Licht mit Projektionswellenlänge sowie Detektionswellenlänge auf.

Der Projektor und die Kamera sind ausserhalb des Fertigungsvolumens angeordnet. Dies hat den Vorteil, dass Verschmutzungen der Prüfeinheit aufgrund bei dem Produktionsprozess entstehender Dämpfe oder Partikel vermieden werden können. Zudem kann die Prüfeinheit so von weiteren produktionsbezogenen Einflüssen (z.B. Temperatur) unberührt bleiben.

Der Projektor und die erste Kamera sind derart ausgerichtet, dass jeweilige durch die Kamera und den Projektor definierte optische Achsen sich jeweils durch eines der (mindestens einen) Transmissionsfester erstrecken, mittels des Projektors eine Projektion auf einer Fertigungsfläche innerhalb des Fertigungsvolumens erzeugbar ist und mittels der Kamera zumindest ein Teil der anprojizierbaren Fertigungsfläche erfassbar ist. Die Anordnung ermöglicht damit eine Licht- oder Musterprojektion in Richtung der Fertigungsfläche und gleichzeitig ein Erfassen von Bildern der so erzeugbaren Projektion. So kann eine Fertigungsinformation bezüglich der inneren Fertigungsfläche, z.B. nach dem Prinzip der Triangulation, erzeugt werden, wobei die Lichtquelle als auch die Detektoren der Prüfeinheit ausserhalb des Volumens angeordnet sind. Die Messinformation ist insbesondere durch einen oder eine Vielzahl von dreidimensionalen Positionsmesspunkten, z.B. 3D-Punktwolke, verkörpert.

Basierend auf dem Erfassen der Projektion ist eine Fertigungsinformation bezüglich der Fertigungsfläche und/oder bezüglich des bereitgestellten und/oder umgeformten Fertigungsmaterials erzeugbar. Die Fertigungsinformation kann z.B. eine Schichtdicke oder Oberflächenrauheit des Objekts repräsentieren und mittels Vergleich von Messdaten zu mehreren Einzelschichten oder anhand einer Intensitätsauswertung erzeugt sein. Die Fertigungsinformation ist zudem an die Steuerungs- und Verarbeitungseinheit übertragbar.

Die Steuerungs- und Verarbeitungseinheit ist zum Erhalt und zur Verarbeitung der Fertigungsinformation und zur Anpassung der Steuerung der Fertigungseinheit basierend auf der Fertigungsinformation während des Fertigungszyklus oder zwischen zwei Fertigungszyklen ausgebildet. Die Prüfeinheit kann also Messdaten oder die abgeleitete Fertigungsinformation als Feedback bereitstellen und die Fertigung kann anhand dieses Inputs angepasst und/oder geregelt werden. Damit können beispielsweise Abweichungen, die während der Produktion durch z.B. externe Einflüsse auftreten können (z.B. Versatz einer Materiallage durch thermischen Einfluss oder mechanischen Stoss), kompensiert werden.

Erfindungsgemäß weist die optische Prüfeinheit eine zweite Kamera auf, wobei die zweite Kamera ebenfalls ausserhalb des Fertigungsvolumens angeordnet ist und derart ausgerichtet ist, dass jeweilige durch die erste und die zweite Kamera sowie den Projektor definierte optische Achsen sich jeweils durch einen der Transmissionsbereiche erstrecken und mittels der ersten sowie der zweiten Kamera zumindest ein gemeinsamer Teil der mit der Projektion überlagerbaren Fertigungsfläche jeweils erfassbar ist. In anderen Worten, kann für jede optische Achse ein zugeordneter, individueller Transmissionsbereich vorgehen sein.

Die beiden Kameras können zueinander fest positioniert sein. Eine relative Lage (in 6DOF) der Kameras zur Kammer kann mittels fotogrammetrische Markierungen neben oder in dem Fertigungsbereich bestimmt werden. Alternativ können die beide Kameras ohne eine feste, bekannte Positionsrelation positioniert sein. Die genaue Lage jeder Einzelkamera kann dann fotogrammetrisch z.B. anhand der Markierungen bestimmt werden, wobei hierdurch für jede Messung produktionsbezogene Einflüsse kompensiert werden können. Dies erlaubt einen deutlich flexibleren Einsatz der Kameras bei signifikanten Temperaturänderungen.

Zumindest eine der Kameras kann derart - insbesondere bezüglich einer Abbildung der Fertigungsfläche - angeordnet bzw. eingerichtet sein, dass hierdurch die Scheimpflugbedingung erfüllt ist. Auch der Projektor kann so angeordnet und eingerichtet sein, dass hierdurch die Scheimpflugbedingung - z.B. bezüglich einer Projektion auf die Fertigungsfläche - erfüllt ist.

Die Scheimpflugbedingung besagt allgemein, dass sich bei einer optischen Abbildung Bild-, Objektiv- und Schärfeebene in einer gemeinsamen Geraden schneiden. Die gewünschte Objektebene kann dann mit maximaler Schärfe abgebildet werden. Die als Schärfeebene bezeichnete scharf abgebildete Objektebene kann somit eine geneigte Ebene sein, wenn entweder die Objektiv- oder die Bildebene einer Kamera geneigt ist.

Sowohl die Bildsensoren der Kameras als auch die Maske im Projektor können in Scheimpflug-Anordnung zur Messebene (Fertigungsfläche) stehen, um eine gleichmässig scharfe Projektion der Maske als auch deren Abbildung von der Ebene auf die Bildsensoren zu erlauben. Insbesondere für das Projektionsobjektiv kann dadurch eine Öffnung der Blende (kleine F-Zahl) mit einer großen Lichtausbeute und NA ermöglicht werden. Das Kameraobjektiv kann zwar eine kleinere Blende aufweisen, jedoch kann durch die Scheimpflug-Anordnung eine gewünschten Auflösung erreicht werden.

Zudem sind die beiden Kameras thermisch von dem Fertigungsvolumen entkoppelt angeordnet. Mögliche thermische Effekte, die seitens der Fertigungseinheit auftreten können, wirken sich damit nicht bzw. nur vernachlässigbar auf die Funktionen, Messgenauigkeit oder Verlässlichkeit der Prüfeinheit aus. So kann eine Kalibration der Prüfeinheit während einer Mehrzahl von Messvorgängen gültig bleiben. Innerhalb des Fertigungsvolumens können während einer Produktion Temperaturen von ca. 500° Celsius entstehen.

Für einen weiteren thermischen Schutz können innerhalb der Fertigungskammer unterhalb der Transmissionsfenster der Kameras und des Projektors mechanische Blenden vorgesehen werden (Shutter), die nur während der Aufnahmezeit geöffnet werden und ansonsten im geschlossenen Zustand die Transmission von thermischer Infrarotstrahlung von dem Messsystem abhalten. Dadurch kann eine unerwünschte Erwärmung aus dem Fertigungsvolumen effizient reduziert werden. Darüber hinaus werden während des Schreibprozesses (additives Fertigen mittels eines Schreiblasers, der das Material umformt) mögliche Reflektionen des Schreiblasers aus der Objektebene in Richtung der Messsystemkomponenten blockiert.

In anderen Worten kann das System zumindest eine als Shutter einsetzbare Blende aufweisen, die mit einer der optischen Achsen der Kamera oder des Projektors derart zusammenwirkt, das eine Transmission von elektromagnetischer Strahlung, insbesondere Infrarotstrahlung, in die Kamera bzw. den Projektor blockierbar ist, insbesondere wobei die Blende in dem Fertigungsvolumen angeordnet ist.

Erfindungsgemäß ist zudem der Projektor thermisch von dem Fertigungsvolumen entkoppelt angeordnet.

Erfindungsgemäß weist die Steuerungs- und Verarbeitungseinheit eine Messfunktionalität auf, bei deren Ausführung zumindest ein erstes Erfassen eines ersten Bildes mit der ersten Kamera, ein zweites Erfassen eines zweiten Bildes mit der zweiten Kamera und ein Ableiten einer Fertigungsinformation basierend auf dem erfassten ersten und erfassten zweiten Bild, insbesondere basierend auf dem in den Bildern erfassten gemeinsamen Teil der mit der Projektion überlagerbaren Fertigungsfläche, und unter Berücksichtigung der bekannten Positionsrelation erfolgen. Die mit der ersten und der zweiten Kamera erzeugbaren Bildinformationen können hierbei gemeinsam zu einer Messinformation verarbeitet werden. Hierzu können jeweilige Bildpaar mittels Bildverarbeitung verarbeitet und nach dem Prinzip der Triangulation daraus Positionsinformationen abgeleitet werden. Ein Bildpaar kann hierbei ein mit der ersten Kamera erfasstes Bild und eine mit der zweiten Kamera erfasstes Bild umfassen, wobei diese Bilder z.B. synchronisiert einander zugeordnet oder erfasst sind.

Das Ableiten der Fertigungsinformation kann also mittels Bildverarbeitung erfolgen.

Während der Erfassung des ersten und des zweiten Bildes erfolgt ein Projizieren von Projektionslicht auf die Fertigungsfläche. Durch bildbasierte Auswertung des so erfassbaren Projektionsmusters auf der Fertigungsfläche kann eine dreidimensionale Positionsinformation für den erfassten Bereich abgeleitet werden. Dabei können externe bzw. interne Kameraparameter berücksichtigt werden. So kann eine Vielzahl von Messpunkten für das Objekt und eine Information zum Fertigungsfortschritt oder zur Fertigungsqualität generiert werden.

Externe Parameter betreffen z.B. die Orientierung einer Kamera relativ zu einem anderen Objekt. Mit bekannter 3D-Information einer mit der Kamera erfassten Markierung kann eine Änderung der relativen Orientierung zwischen Kamera und 3D-Druck ermittelt und korrigiert werden.

Interne Parameter betreffen z.B. die optische Geometrie im inneren der Kamera und deren Kalibrierung. Falls sich ein interner Parameter während des Druckprozesses verändert, kann ein aktualisierter interner Parameter durch einen iterativen Algorithmus anhand der erfassten Markierung ermittelt und korrigiert werden, ohne den Druckprozess unterbrechen und eine neue Kalibrierung durchführen zu müssen.

Erfindungsgemäß wird basierend auf dem erfassten ersten und erfassten zweiten Bild eine dreidimensionale Repräsentation für die Fertigungsfläche (also auch für das darauf entstehende oder befindliche Objekt) als die Fertigungsinformation abgeleitet, insbesondere wobei die dreidimensionale Repräsentation eine 3D Punktwolke ist.

Das Fertigungsvolumen ist thermisch isoliert ausgebildet, wobei der Transmissionsbereich als Transmissionsfenster ausgebildet ist. Typischerweise ist hierfür ein Gehäuse um das Fertigungsvolumen vorgesehen, welches eine thermische Dämmfunktionalität aufweist und damit eine Abschirmung des Gehäuseinneren von der Umgebung bereitstellt. In einem solchen Gehäuse können entsprechende Sichtfenster vorgesehen, die einen Strahlungsdurchtritt zum Zweck der Messung mit der Prüfeinheit zulassen.

Um den Einfluss möglicher Temperaturänderungen auf das Messsystem möglichst klein bzw. vernachlässigbar zu halten, kann in einer Ausführungsform eine Temperatur zumindest einer der Kameras mittels der Steuerungs- und Verarbeitungseinheit aktiv regelbar sein, wobei eine Ventilation, Wasserkühlung und/oder ein Peltierelement seins der zumindest einen Kamera vorgesehen ist und mittels der Steuerungs- und Verarbeitungseinheit steuerbar ist.

Damit das Messsystem wenig von den Temperaturen in der Fertigungskammer beeinflusst wird, können die Kameras und/oder der Frame (Rahmen) aktiv temperaturgeregelt sein. Zunächst können die Kameras und/oder der Frame mit Ventilatoren belüftet werden, damit diese eher in thermischen Kontakt mit der Umgebung stehen als mit der Fertigungskammer. Mit Hilfe von Temperatursensoren und Peltierelementen kann die Temperatur weiter stabilisiert werden. Insbesondere ist eine aktive Temperaturregelung von der mechanischen Schnittstelle zwischen Objektiv und Kamera von Vorteil, weil diese die Wärmeausbreitung hin zur Kamera vermindert oder blockiert und so wichtige optische Teile (z.B. Objektiv, Schnittstelle, Bildsensor) thermisch stabilisiert sind.

Mit einem hohlen Frame (z.B. CFK-Rohre oder hohle Metallprofile) kann der Frame von innen belüftet oder mit Kühlflüssigkeit thermisch stabilisiert sein. Aussen kann der Frame dann isoliert sein. Durch die Temperaturstabilisierung des Frames kommt sodann auch Aluminium als Fertigungsmaterial in Frage.

Insbesondere können die Kameras und der Projektor an einem Rahmen angeordnet sein und eine Temperatur des Rahmens kann mittels der Steuerungs- und Verarbeitungseinheit aktiv geregelt werden. Dabei kann der Rahmen insbesondere als Hohlrahmen ausgeführt sein und ein Belüftungselement (z.B. Ventilator) zur Innenbelüftung des Rahmens vorgesehen sein.

Zur Erzeugung eines Regelinputs kann ein Temperatursensor an dem Rahmen und/oder zumindest einer der Kameras bzw. dem Projektor vorgesehen sein.

Gemäss einer Ausführungsform kann mindestens eine der optischen Achsen orthogonal zu dem mindestens einen optischen Transmissionsbereich oder- Fenster ausgerichtet sein.

Das Fertigungsvolumen kann insbesondere drei optische Transmissionsfenster aufweisen, wobei jeweils eine der optischen Achsen jeweils einem der Transmissionsfenster zugeordnet ist und sich jeweils orthogonal durch das zugeordnete Transmissionsfenster erstreckt.

Durch die orthogonale Ausrichtung der optischen Achsen können Aberrationen oder ungewollte Lichtreflexe vermieden werden. Alternativ kann bei Verwendung einer hohen Objektivblendezahl (kleine Apertur) und einer dünnen Planplatte die optische Achse schräg ausgerichtet bleiben, da die durch das Transmissionsfenster verursachte Aberration vernachlässigbar wird.

Ein Gehäuse der Fertigungseinheit kann also z.B. drei Sichtfenster aufweisen. Durch eines der Fenster kann Messstrahlung in das Innere des Volumens projiziert werden. Mit den beiden Kameras kann die dadurch erzeugbare Projektion jeweils erfasst werden, wobei jede Kamera das Erfassen via ein jeweiliges anderes Fenster erreicht. Durch die Zuordnung zu unterschiedlichen Sichtfenstern kann zudem eine hohe Flexibilität hinsichtlich der Anordnung der Prüfkomponenten (Kameras und Projektor) erreicht werden.

Die Erfindung betrifft zudem ein Messverfahren für einen additiven Fertigungsprozess eines Objekts. Das Überwachungsverfahren umfasst zumindest ein additives Fertigen des Objekts mit metallhaltigem Fertigungsmaterial, insbesondere pulver-, granulat- und/oder drahtförmigem Fertigungsmaterial, insbesondere 3D-Druck, in einem Fertigungsvolumen mittels wiederholten Ausführens eines Fertigungszyklus bzw. -schritts.

Der Fertigungszyklus wird ausgeführt mit einem Bereitstellen des metallhaltigen Fertigungsmaterials in definierter Menge und Position und zumindest partiellem, positionsgenauem Umformen des bereitgestellten Fertigungsmaterials, insbesondere durch partielles Aufschmelzen des Fertigungsmaterials. Durch das wiederholte Ausführen eines solchen Zyklus kann als Folge ein dreidimensionales Objekt erstellt werden.

Im Rahmen des Verfahrens wird zudem eine fertigungsbezogene Fertigungsinformation während zumindest einem Abschnitt des additiven Fertigens erzeugt.

Die Fertigungsinformation wird erzeugt mit einem Erzeugen und Emittieren eines Projektionslichts ausserhalb des Fertigungsvolumens. Zudem erfolgt via zumindest eines Licht-Transmissionsbereichs (z.B. Sichtfenster) des Fertigungsvolumens ein Projizieren des Projektionslichts auf eine Fertigungsfläche in dem Fertigungsvolumen, ein erstes Erfassen eines ersten Bildes mit zumindest einem Teil der Projektion des Projektionslichts ausserhalb des Fertigungsvolumens und ein zweites Erfassen eines zweiten Bildes mit zumindest einem Teil der Projektion des Projektionslichts ausserhalb des Fertigungsvolumens.

Im ersten Bild und im zweiten Bild ist dabei ein gemeinsamer Teil der Projektion erfasst und das Projizieren, das erste Erfassen und das zweite Erfassen erfolgen mit fester und bekannter relativer Positionsrelation.

Ferner erfolgt ein Ableiten der Fertigungsinformation basierend auf dem erfassten ersten und erfassten zweiten Bild und unter Berücksichtigung der bekannten Positionsrelation.

Erfindungsgemäß wird basierend auf dem erfassten ersten und erfassten zweiten Bild eine dreidimensionale Repräsentation für die Fertigungsfläche als die Fertigungsinformation abgeleitet, insbesondere wobei die dreidimensionale Repräsentation eine 3D Punktwolke ist.

Die dreidimensionale Repräsentation kann erzeugt werden durch ein Identifizieren von Merkmalen des Fertigungsvolumens in dem ersten und zweiten Bild, ein Bestimmen jeweils gleicher Merkmale in dem ersten und zweiten Bild und jeweiliger Bildpositionen der Merkmale in dem ersten und zweiten Bild (basierend auf Bildverarbeitung) und ein Ableiten einer dreidimensionalen Position für die Merkmale anhand der Bildpositionen (z.B. mittel Triangulation basierend auf den Bildpositionen und der bekannten Positionsrelation insbesondere der Kameras). Die Merkmale können beispielsweise durch die Projektion seitens des Projektors erzeug werden (z.B. Lichtmuster) oder können strukturell fertigungsbedingt gegebene Merkmale sein (z.B. eine Kontur des zu erstellenden Objekts).

Zur Bereitstellung geeigneter Messbedingungen wird das Projektionslicht als strukturierte Beleuchtung, erfindungsgemäß als Sequenz unterschiedlicher Muster erzeugt, und die dreidimensionale Repräsentation anhand der strukturierten Beleuchtung abgeleitet. Es wird also eine Abfolge von Mustern auf die Fläche projiziert und anhand der Kameras beobachtet und erfasst. Durch die Projektion unterschiedlicher Muster können die 3D-Punktdaten mit verbesserter Genauigkeit (z.B. durch Mittelung) und verbesserter Verlässlichkeit (z.B. für Bereiche mit schwierigen Beleuchtungsbedingungen) erzeugt werden.

In einer Ausführungsform kann eine in einer bekannten Positionsrelation zur Fertigungsfläche vorgesehene Markierung in dem ersten und/oder dem zweiten Bild erfasst werden und die Position der erfassten Markierung im ersten bzw. im zweiten Bild beim Ableiten der Prozessinformation verarbeitet werden. Anhand einer Bildposition der Markierung in zumindest einem der Bilder und einem Vergleich mit einer vorherigen oder hinterlegten Referenzposition kann so auf einen Zustand der Fertigungseinheit, insbesondere auf eine Temperatur in dem Fertigungsvolumen, geschlossen werden. Beispielsweise kann eine (radiale) Ausdehnung der Fertigungsfläche aufgrund höherer Temperatur festgestellt werden.

Insbesondere kann anhand eines Vergleichs der bekannten Positionsrelation mit der Bildposition der erfassten Markierung im ersten bzw. im zweiten Bild eine Temperaturinformation für das Fertigungsvolumen abgeleitet werden. Für eine quantitative Ableitung dieser Information kann vorzugsweise eine vorangehende Kalibrierung herangezogen werden, z.B. eine Zuordnung eines Ausmasses einer Positionsabweichung der Markierung zu einer Temperaturdifferenz.

Alternativ kann anhand der Markierung ein Monitoring und eine Korrektur der externen und internen Kameraparameter erfolgen. Dies ist insbesondere von Vorteil, falls die Position und interne Geometrie der Kamera während eines lange dauernden Druckprozesses ändert.

Im Rahmen des additiven Fertigens kann nach Ausführen eines Fertigungszyklus eine Positionsvariation, insbesondere Absenken, der Fertigungsfläche erfolgen, wobei ein gemessenes Ausmass der Positionsvariation beim Ableiten der Prozessinformation verarbeitet wird oder die Positionsvariation basierend auf einer bezüglich des Ausmasses der Positionsvariation abgeleiteten Prozessinformation angepasst wird.

In anderen Worten kann eine schichtweise Absenkung des Druckbereichs präzise über einen mechanischen Antrieb mit Encoder vorgenommen und überwacht werden. Diese Bewegung kann als zusätzliche Monitorfunktion für das Messsystem herangezogen werden, womit sich in-line (bezüglich der Produktion) Temperatureffekte im Messsystem eliminieren lassen.

Ist andernfalls der Antrieb der Druckplatte (Fertigungsfläche) ungenau (z.B. aufgrund von Temperatureinflüssen) kann das Messsystem zur Beobachtung und Korrektur der Bewegung verwendet werden (closed-loop Einsatz). Durch die Bewegungsüberwachung kann also das tatsächliche Absenken der Fertigungsfläche gesteuert werden.

Gemäss einer Ausführungsform kann im Rahmen des additiven Fertigens eine definierte Kontrollstruktur (mit) aufgebaut werden und die Prozessinformation mit Bezug zu der Kontrollstruktur erzeugt werden. So können z.B. während des Drucks am Randbereich Säulen mitgedruckt werden, über die eine direkte Prüfung eines Laser-Schreibprozesses möglich ist, d.h. es lassen sich quasi Markierungen im Schreibbereich mitdrucken. Anhand dieser Struktur kann dann eine Aussage zur Präzision der additiven Fertigung des parallel aufgebauten Objekts getroffen werden. Eine Sollform und Sollgrösse der Kontrollstruktur sind hierfür bekannt. Insbesondere ist ein Template (Schablone) für die Struktur hinterlegt. Durch einen Abgleich einer Messung an der Kontrollstruktur mit den bekannten Sollparametern kann so die Information bezüglich der Fertigungsqualität abgeleitet werden.

Zudem kann eine Auswertung jeweils gedruckter Objekt-Schichten erfolgen (z.B. Vergleich mit Design-Daten für das Objekt). Aus der Auswertung können in-line Korrekturparameter für den Schreiblaser bzw. eine Ablenkungseinheit für den Laser (Galvanospiegel) abgeleitet werden.

Es versteht sich, dass jeweilige Ausführungsformen des Verfahrens mit jenen des Systems kombinierbar sind.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: schematisch einen Aufbau des erfindungsgemässen Prüfsystems in einer Seitenansicht;
- Fig. 2: schematisch einen Aufbau des erfindungsgemässen Prüfsystems in einer Frontalansicht;
- Fig. 3: eine weitere Ausführungsform des Prüfsystems; und
- Fig. 4: eine Anordnung jeweiliger Sichtfelder eines erfindungsgemässen Prüfsystems.

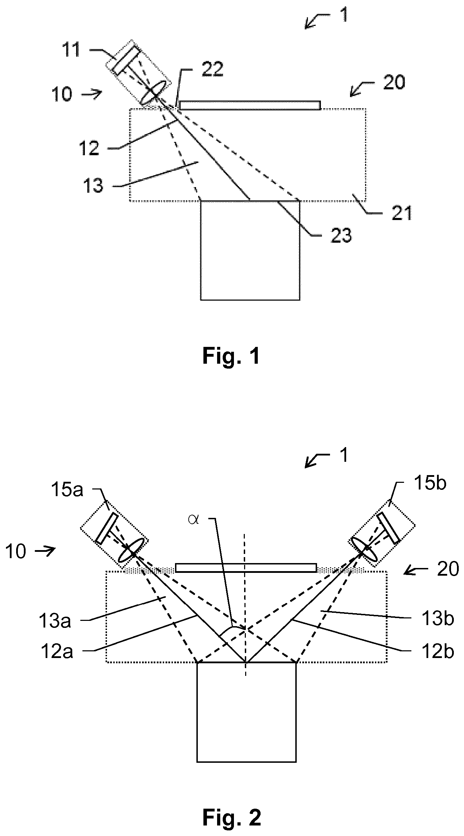

Figur 1 zeigt eine Ausführungsform eines Systems 1 zur überwachten additiven Fertigung eines Objekts gemäss der Erfindung in Seitenansicht. Das System besteht aus einer Fertigungseinheit 20, d.h. hier einem 3D-Drucker, und einer optischen Prüfeinheit 10. In der gezeigten Ansicht ist eine Projektionseinheit 11 als Teil der Prüfeinheit 10 dargestellt. Die beiden zugehörigen Kameras sind in Figur 2 dargestellt.

Die Projektionseinheit 11 definiert eine optische Achse 12 und ein Sichtfeld 13 (field of view), innerhalb dessen eine Lichtprojektion durch ein Sichtfenster 22 in das Innere des Fertigungsvolumens 21 gerichtet werden kann. Mittels der Projektionseinheit 11 kann also Licht emittiert und in Richtung einer Fertigungsfläche 23 der Fertigungseinheit 20 gerichtet werden. Damit ist eine definierte Projektion auf der Fertigungsfläche 23 erzeugbar.

Die Projektionseinheit 11 ist thermisch entkoppelt von der Fertigungseinheit 20 angeordnet. Sowohl die Kameras als auch die Projektionseinheit 11 können hierzu durch einen stabilen Rahmen miteinander verbunden sein. Dieser Rahmen kann vorzugsweise mindestens zu einem Teil aus einem thermisch inerten Material (z.B. Invar, Carbon) bestehen. Der Rahmen kann alternativ oder zusätzlich mit Isolationsmaterial von der Baukammer thermisch isoliert ausgeführt sein. Dadurch können thermisch bedingte Einflüsse auf die Anordnung minimiert werden. Das Messsystem kann so möglichst thermisch entkoppelt ausgebildet und angeordnet werden, damit eine Kalibration des Systems auch bei hohen Temperaturen gültig bleibt. In der 3D-Druckkammer (Fertigungsvolumen 21) können aufgrund des Fertigungsprozesses Temperaturen von 200° bis 500° Celsius oder höher erreicht werden. Damit kann ein vergleichsweise grosser Einfluss auf die Struktur des Systems entstehen.

Bei dem gezeigten 3D-Drucker handelt es sich um einen Drucker, der eine dreidimensionale Struktur aus einem Pulverbett heraus aufzubauen vermag. Hierzu wird ein metallhaltiges Pulver (oder Granulat) mit einer definierten Schichtdicke auf der Fertigungsfläche 23 aufgebracht. Das Pulver wird z.B. mittels einer Rakel auf der Fläche 23 glatt verteilt. Das Pulver kann hierzu zunächst in das Fertigungsvolumen 21 eingebracht und dann mit der Rakel über die Fläche 23 gezogen oder geschoben werden. Im Anschluss erfolgt eine partielle Verfestigung des Pulvers durch entsprechendes partielles Aufschmelzen des Pulvers mit gerichteter Laserstrahlung. So kann eine dünne Schicht (Lage) eines zu erstellenden Objekts erzeugt werden.

Die Steuerung der Materialverfestigung basiert typischerweise auf einem digitalen Modell (z.B. CAD Modell) des zu erstellenden Objekts. Hierzu kann das Objekt als ein Stapel von Einzellagen repräsentiert werden und die Verfestigung jeweils entsprechend der aktuell zu erzeugenden Lage punktuell oder entsprechend der Objektkontur für diese Lage ausgeführt werden. In anderen Worten, wird der Laserstrahl anhand der jeweils zu produzierenden Lage gesteuert abgelenkt.

Nach der schichtbezogenen Verfestigung wird das Pulverbett abgesenkt, insbesondere entsprechend der Dicke der zuvor verfestigten Schicht. Es wird eine neue Lage des metallischen Pulverrohstoffes aufgebracht, verteilt und eine nächste Schicht verfestigt. Hierdurch entsteht eine zweite feste Lage des Objekts, die durch den Schmelzvorgang mit der ersten Lage verbunden ist. Durch wiederholtes Ausführen dieser Schritte kann ein Objekt nahezu beliebiger Form innerhalb des Fertigungsbereichs 23 schichtweise aufgebaut werden.

Zur Überwachung und Kontrolle des Fertigungsprozesses ist hier die Prüfeinheit 10 vorgesehen. Wie in Figur 2 dargestellt weist die Prüfeinheit 10 (Frontalansicht) neben dem Projektor 11 zumindest die zwei Kameras 15a und 15b auf.

Der Projektor 11 kann zentral zwischen den beiden Kameras 15a,15b und zudem seitlich versetzt angeordnet sein, damit ein oberes Sichtfenster für die Prozesskammer 21 frei bleibt. Der Projektor 11 kann zudem vorzugsweise in einem möglichst kleinen Winkel relativ zu dem oberen Sichtfenster ausgerichtet sein, um eine Abdeckung durch z.B. einen Gaseinlass zu vermeiden.

In der vorgeschlagenen Prüfeinheit 10 können die Kameras 15a,15b insbesondere als 50-Megapixel Kameras ausgebildet sein, um eine gewünschte laterale Auflösung von kleiner als 60 µm innerhalb des gemeinsamen Sichtfelds (mit z.B. einer Felddiagonale von 200mm) zu erreichen. Die gewünschte Auflösung ist hier vorzugsweise entsprechend der durchschnittlichen Grösse der Pulverpartikel des Fertigungsrohstoffes und/oder der applizierten Schichtdicke gewählt. Ein jeweiliger Triangulationswinkel α relativ zur optischen Achse des zentralen Sichtfensters der beiden Kameras 15a,15b kann hierfür verhältnismässig gross gewählt werden, z.B. 45°.

Der Projektor 11 ist vorzugsweise derart ausgestaltet, dass ein sinusförmiges (bezüglich der Intensitätsverteilung) Streifenmuster mit einem Streifenabstand von 0.4 mm mit hohem Kontrast projizierbar ist. Dies ermöglicht eine Signalerfassung mit geringerem Rauschen. Die Apertur des Projektors 11 kann dabei möglichst gross gewählt sein, um nur einen kleinen Speckle-Kontrast auf rauen Oberflächen (Rₐ < 0.1 µm) zuzulassen.

Hierbei wird also statt der Verwendung von Projektor-Kamera-Paaren ein echtes Kamera-Kamera-Paar (mit Projektor) als Messinstrument in Kombination mit strukturierter Beleuchtung durch den Projektor vorgeschlagen. Dabei wirkt sich die übliche deutliche thermische Belastung des Projektors nicht auf die Messgenauigkeit aus. Die thermische Stabilität des gesamten Systems wird dadurch deutlich verbessert.

Neben einer strukturierten Beleuchtung (mit Phasenschieben) kann das Messverfahren auch mit einer photogrammetrischen Aufnahme und Auswertung betrieben oder ergänzt werden. Der Projektor dient in diesem Fall (nur) zur gleichmäßigen Beleuchtung. Anhand von identifizierbaren Merkmalen im Objektraum können mit einer Bündelausgleichsrechnung oder mittels Stereo-Matching für die Stereo-Kameraanordnug eine dreidimensionale Lage dieser Merkmale und damit Koordinaten bestimmt werden.

Auch ist die Projektion eines Musters mit Zufallsintensitätsverteilung als künstliche Textur eine Variante für eine Messung. Die erreichbare laterale Auflösung kann dabei zwar niedriger sein, jedoch kann mit einer einzigen synchronisierten Aufnahme der beiden Stereo-Kameras eine 3D-Punktwolke generiert werden.

Die Kameras 15a,15b und der Projektor 11 können in einer Scheimpflug-Anordnung (die Scheimpflugbedingung erfüllend) zur Messebene stehen. Insbesondere stehen sowohl die Bildsensoren der Kameras 15a,15b als auch eine Projektionsmaske im Projektor 11 in einer Scheimpflug-Anordnung zur Messebene. Die Bildsensoren sind relativ zur optischen Achse gekippt angeordnet. Damit kann eine gleichmässig scharfe Projektion der Maske als auch deren Abbildung von der Prüfebene auf die Bildsensoren generiert werden. Insbesondere für das Projektionsobjektiv kann dadurch eine Öffnung einer Blende (kleine F-Zahl) mit einer großen Lichtausbeute und numerischen Apertur (NA) ermöglicht werden. Das Kameraobjektiv kann eine kleinere Blende aufweisen. Die Scheimpflug-Anordnung trägt massgebend zur Erfüllung der vergleichsweise ambitionierten Auflösungsansprüche bei.

Die Projektionseinheit 11 kann als Analog-Projektor (im ggs. zu einem Digital-Projektor) mit einer fein strukturierten Maske (Dia), die eine ultra-hohe Tiefenauflösung (ca. 1 µm) über ein großes Projektionsfeld von mehreren hunderten Millimetern ermöglicht, ausgeführt sein. Das hiermit erreichbare Orts-Bandbreite-Produkt (Anzahl der aufzulösenden Punkte) ist mit einem Digital-Projektor typischerweise nicht oder nur schwierig zu realisieren.

Die mit dem Prüfsystem 10 beobachtbaren Objektstrukturen können stellenweise eine hohe Reflektivität aufweisen, beispielsweise durch ein Schmelzen und Abkühlen des Rohmaterials. Zur verlässlichen Erfassung auch solcher Regionen kann ein HDR-Modus (high dynamic range) für die Kamera vorgesehen sein. Alternativ oder zusätzlich können Mehrfachaufnahmen mit unterschiedlichen Belichtungszeiten erzeugt werden, um eine höhere Bilddynamik verglichen mit einer Standard-Einzelaufnahme zu erzielen.

Neben einer Kalibration der beiden Kameras 15a,15b zueinander kann auch eine Kalibration zwischen den einzelnen Kameras 15a,15b und dem Projektor 11 bereitgestellt werden, um im Fall von spekularen (übersteuerten) Bereichen in einem der Kamerabilder trotzdem eine Auswertung zu ermöglichen. Hier kann dann auf nur ein Paar Kamera-Projektor für die Triangulationsauswertung zurückgegriffen werden. Dadurch kann eine größere Robustheit des Systems erreicht werden. Zudem kann hierdurch ohne aufwändige Mehrfachbelichtungen eine HDR-Erfassung durchgeführt werden (Messzeitgewinn).

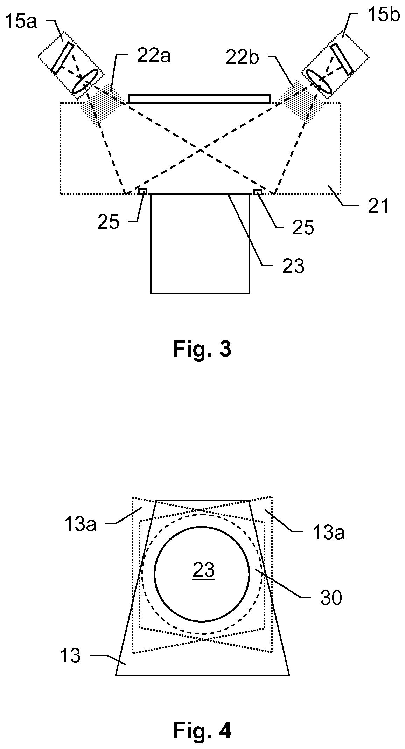

Figur 3 zeigt eine weitere Ausführungsform eines erfindungsgemässen Systems. Der Aufbau des 3D-Druckers und des Projektors sowie der beiden Kameras der Prüfeinheit 10 sind mit demjenigen der Figuren 1 und 2 vergleichbar. Gleiche Elemente sind mit gleichen Bezugszeichen bezeichnet.

In dem Fertigungsvolumen 21 sind neben der Fertigungsfläche 23 Markierelemente 25 vorgesehen. Die Markierungen 25 können neben der Auswertung des kreisförmigen Druckbereichs auch zur Eliminierung von möglichen Temperatureffekten auf das Messsystem dienen, indem die Korrelation zwischen Temperaturänderung und Änderung der Markenpositionen evaluiert wird. In anderen Worten, kann eine Referenzposition für die Markierungen 25 hinterlegt sein, die einen Normalzustand des Systems angibt. Diese Position kann mittels einer oder beider Kameras bildbasiert (mittels Bildverarbeitung) verifiziert oder festgestellt werden.

Zum einen erlaubt die Überwachung der Markerpositionen das quantitative Feststellen eines thermischen Einflusses auf den Drucker, zum anderen kann anhand eines bekannten Driftverhaltens der Marker 25 eine qualitative Aussage über den thermischen Zustand des Systems getroffen werden. Damit kann eine direkte bildbasierte Temperaturbestimmung durchgeführt werden. Hierfür ist insbesondere Kalibrierung vorzusehen, d.h. jeweilige Markerpositionen werden jeweiligen Temperaturzuständen zugeordnet.

Mittel einer Positionsbestimmung der Markierungen 25 kann ein insbesondere radialsymmetrisches Driften (Skalierung) der Markerpositionen um den Druckbereich (Fertigungsfläche 23) herum erkannt werden. Dies kann ebenfalls auf eine Temperaturerhöhung innerhalb der Kammer 21 zurückgeführt werden. Anhand einer solchen Feststellung kann eine damit einhergehende Positionsveränderung des zu produzierenden Objekts in der Fertigungskammer 21 abgeleitet und der additive Fertigungsprozess entsprechend angepasst werden.

Zudem ist mittels der Erfassung der Markierungen 25, die eine bestimmte Position relativ zur Fertigungskammer haben können, eine Überwachung und Korrektur der angewendeten Kameraparameter (interne und externe) zugänglich. So kann z.B. ein Positionsdriften der Kamera oder eine Veränderung der inneren Struktur aufgrund z.B. Temperatureinflüssen kompensiert werden.

In der gezeigten Ausführungsform sind die Sichtfenster 22a,22b, durch welche die beiden Kameras 15a,15b eine Projektion im Inneren der Kammer 21 erfassen können, derart relativ zu den Kameras 15a,15b ausgerichtet, dass eine jeweilige optische Achse der Kameras 15a,15b orthogonal zu dem jeweiligen Sichtfenster 22a,22b ausgerichtet ist. Die Beobachtungsfenster 22a,22b für die Kammer sollen also senkrecht zur optischen Achse der Objektive angeordnet sein. Hierdurch können Aberrationen - insbesondere bei großer Fensterdicke und/oder großer Objektivapertur - minimiert werden. Außerdem können die Sichtfenster 22a,22b aus einem Material mit sehr guter thermischer Leitfähigkeit und kleinem Wärmeausdehnungskoeffizienten (z.B. Saphir) gefertigt sein. Deformationen durch Erwärmungen können damit minimiert werden. In einer alternativen Ausführungsform können die Fenster 22a,22b (zusätzlich oder alternativ) aktiv gekühlt sein. Die Fenster können alternativ oder zusätzlich mit einer dielektrischen Beschichtung zur Isolation in Hinblick auf die Wärmestrahlung versehen sein.

Figur 4 zeigt ein mit einer Prüfeinheit gemäss der Erfindung erzeugtes effektives Sichtfeld 30 für die Erfassung von Messdaten. Das Sichtfeld 30 ist durch die Anordnung der Kameras und des Projektors der Prüfeinheit sowie durch die Auslegung deren optischer Komponenten so erzeugt, dass ein Fertigungsbereich 23, insbesondere Fertigungsfläche, einer Fertigungseinheit von dem effektiven Sichtfeld des gebildeten Scanners (Prüfeinheit) vollständig abgedeckt bzw. umfasst ist. Gemäss spezifischer Ausführungsformen sind erfindungsgemäss auch Lösungen denkbar, wobei nur ein Teil der Fertigungsfläche durch einen Scanner erfasst ist. Eine gleichzeitige Anordnung mehrerer derartiger Scanneraufbauten ist weiter denkbar, um die Fertigungsfläche gesamthaft (auch redundant) zu erfassen.

Das mit dem Projektor abdeckbare Projektionssichtfeld 13 ist zu einem Teil mit beiden Kameras erfassbar. Die Grösse und Form der Erfassungssichtfelder 13a und 13b der Kameras definieren somit zusammen mit dem verfügbaren Projektionssichtfeld 13 die Grenzen des effektiven Scanbereichs 30. Der Scanbereich 30 entspricht somit jenem Bereich, innerhalb dessen Messdaten, insbesondere 3D-Koordinaten, bezüglich des Fertigungsbereichs 23 erzeugbar sind.

Das Projekt, das zu der vorliegenden Patentanmeldung geführt hat, hat eine Finanzierung seitens des EU-Programms für Forschung und Innovation "Horizon 2020" unter der Zuschussvereinbarung Nr. 690689 erhalten.

Es versteht sich, dass diese dargestellten Figuren nur mögliche Ausführungsbeispiele schematisch darstellen.

## Patentansprüche

1. System (1) zur überwachten additiven Fertigung eines Objekts, mit
• einer Fertigungseinheit (20), insbesondere 3D-Drucker, die zur additiven Fertigung des Objekts basierend auf metallhaltigem Fertigungsmaterial, insbesondere pulver-, granulat- und/oder drahtförmigem Fertigungsmaterial, in einem Fertigungsvolumen (21) ausgebildet ist, wobei das Objekt in einem Fertigungszyklus mittels wiederholtem
□ schichtweisem Bereitstellen des metallhaltigen Fertigungsmaterials in definierter Menge, und
□ zumindest partiellem, positionsgenauem Umformen des bereitgestellten Fertigungsmaterials, insbesondere durch partielles Aufschmelzen des Fertigungsmaterials,
aufbaubar ist,
• einer optischen Prüfeinheit (10) mit mindestens
□ einem Projektor (11) und
□ einer ersten Kamera (15a) und
• einer Steuerungs- und Verarbeitungseinheit, die zumindest zur Steuerung der Fertigungseinheit (20) ausgebildet ist, wobei
• das Fertigungsvolumen (21) mindestens einen optischen Transmissionsbereich (22,22a,22b) aufweist,
• der Projektor (11) und die erste (15a) Kamera (15b) ausserhalb des Fertigungsvolumens (21) angeordnet sind und derart ausgerichtet sind, dass
□ jeweilige durch die erste Kamera (15a,15b) sowie den Projektor (11) definierte optische Achsen (12,12a,12b) sich jeweils durch mindestens einen Transmissionsbereich (22,22a,22b) erstrecken,
□ mittels des Projektors (11) eine Projektion auf einer Fertigungsfläche (23) innerhalb des Fertigungsvolumens (21) erzeugbar ist und
□ mittels der ersten Kamera (15a,15b) zumindest ein Teil der mit der Projektion überlagerbaren Fertigungsfläche (23) erfassbar ist, und
□ basierend auf dem Erfassen der Projektion eine Fertigungsinformation bezüglich der Fertigungsfläche und/oder bezüglich des bereitgestellten und/oder umgeformten Fertigungsmaterials erzeugbar ist,
• die Fertigungsinformation an die Steuerungs- und Verarbeitungseinheit übertragbar ist,
• die Steuerungs- und Verarbeitungseinheit zum Erhalt und zur Verarbeitung der Fertigungsinformation und zur Anpassung der Steuerung der Fertigungseinheit (20) basierend auf der Fertigungsinformation während des Fertigungszyklus oder zwischen zwei Fertigungszyklen ausgebildet ist,
• die optische Prüfeinheit (10) eine zweite Kamera (15b) aufweist und die zweite Kamera (15b) ausserhalb des Fertigungsvolumens (21) angeordnet ist und derart ausgerichtet ist, dass
□ jeweilige durch die erste und die zweite Kamera (15a,15b) sowie den Projektor (11) definierte optische Achsen (12,12a,12b) sich jeweils durch einen Transmissionsbereich (22,22a,22b) erstrecken und
□ mittels der ersten sowie der zweiten Kamera (15a,15b) zumindest ein gemeinsamer Teil der mit der Projektion überlagerbaren Fertigungsfläche (23) jeweils erfassbar ist,
• die Steuerungs- und Verarbeitungseinheit eine Messfunktionalität aufweist, bei deren Ausführung zumindest erfolgen
□ ein erstes Erfassen eines ersten Bildes mit der ersten Kamera (15a),
□ ein zweites Erfassen eines zweiten Bildes mit der zweiten Kamera (15b),
□ ein Ableiten der Fertigungsinformation basierend auf dem erfassten ersten und erfassten zweiten Bild, insbesondere basierend auf dem in den Bildern erfassten gemeinsamen Teil der mit der Projektion überlagerbaren Fertigungsfläche (23), und unter Berücksichtigung der bekannten Positionsrelation, und
□ basierend auf dem erfassten ersten und erfassten zweiten Bild eine dreidimensionale Repräsentation bezüglich der Fertigungsfläche (23) und/oder bezüglich des bereitgestellten und/oder umgeformten Fertigungsmaterials als die Fertigungsinformation abgeleitet wird, insbesondere wobei die dreidimensionale Repräsentation eine 3D Punktwolke ist,
• die Projektion als Sequenz unterschiedlicher Muster erzeugbar ist und die dreidimensionale Repräsentation anhand der Sequenz unterschiedlicher Muster abgeleitet wird,
**dadurch gekennzeichnet, dass**
• das Fertigungsvolumen (21) thermisch isoliert und der Transmissionsbereich als Transmissionsfenster (22,22a,22b) ausgebildet ist.

2. System (1) nach Anspruch 1,
**dadurch gekennzeichnet, dass**
zumindest die erste und/oder die zweite Kamera (15a,15b), insbesondere der Projektor (11),
• in fester Positionsrelation zu dem Fertigungsvolumen (21) und/oder
• die Scheimpflugbedingung bezüglich des Erfassens der Fertigungsfläche (23) mit der Kamera (15a,15b) bzw. der Projektion auf die Fertigungsfläche (23) mit dem Projektor (11) erfüllend
eingerichtet ist.

3. System (1) nach Anspruch 1 oder 2,
**dadurch gekennzeichnet, dass**
• das Ableiten der Fertigungsinformation mittels Bildverarbeitung erfolgt und/oder
• während der Erfassung des ersten und des zweiten Bildes ein Projizieren von Projektionslichts auf die Fertigungsfläche (23) erfolgt.

4. System (1) nach einem der Ansprüche 1 bis 3,
**dadurch gekennzeichnet, dass**
die Fertigungsinformation eine Information bezüglich
• einer mittleren Schichtdicke einer oder mehrerer Einzelschichten des bereitgestellten und/oder umgeformten Fertigungsmaterials oder
• einer Schichtdickenvariation im Bereich der Fertigungsfläche (23) oder
• eines Geometriezuwachses des Objekts durch Applizieren einer bestimmten Anzahl von Einzelschichten oder
• eine Oberflächenrauheit des Objekts repräsentiert, insbesondere wobei die Fertigungsinformation mittels eines Vergleichs von optischen Messdaten für zwei oder mehrerer aufeinanderfolgend applizierte Schichten ableitbar ist, insbesondere wobei ein Absenken der Fertigungsfläche berücksichtigt ist.

5. System (1) nach einem der Ansprüche 1 bis 4,
**dadurch gekennzeichnet, dass**
• eine Temperatur zumindest einer der Kameras (15a,15b) mittels der Steuerungs- und Verarbeitungseinheit aktiv regelbar ist, wobei eine Ventilation und/oder ein Peltierelement vorgesehen ist und mittels der Steuerungs- und Verarbeitungseinheit steuerbar ist,
und/oder
• die erste und die zweite Kamera (15a,15b) sowie der Projektor (11) an einem Rahmen angeordnet sind und eine Temperatur des Rahmens mittels der Steuerungs- und Verarbeitungseinheit aktiv regelbar ist, insbesondere wobei der Rahmen als Hohlrahmen ausgeführt ist und ein Belüftungselement zur Innenbelüftung des Rahmens vorgesehen ist.

6. System (1) nach einem der Ansprüche 1 bis 5,
**dadurch gekennzeichnet, dass**
• zumindest eine der optischen Achsen (12,12a,12b) orthogonal zu dem mindestens einen optischen Transmissionsbereich ausgerichtet ist,
und/oder
• das Fertigungsvolumen (21) drei optische Transmissionsfenster (22,22a,22b) aufweist und jeweils eine der optischen Achsen (12,12a,12b) jeweils einem der Transmissionsfenster (22,22a,22b) zugeordnet ist, insbesondere wobei sich die optischen Achsen (12,12a,12b) jeweils orthogonal durch das zugeordnete Transmissionsfenster (22,22a,22b) erstrecken,
und/oder
• das System zumindest eine als Shutter einsetzbare Blende aufweist, die mit einer der optischen Achsen (12,12a,12b) der Kamera oder des Projektors derart zusammenwirkt, das eine Transmission von elektromagnetischer Strahlung, insbesondere Infrarotstrahlung, in die Kamera bzw. in den Projektor blockierbar ist, insbesondere wobei die Blende in dem Fertigungsvolumen angeordnet ist.

7. Messverfahren für und mit einem additiven Fertigungsprozess eines Objekts, mit
• einem additiven Fertigen des Objekts mit metallhaltigem Fertigungsmaterial, insbesondere pulver-, granulat- und/oder drahtförmigem Fertigungsmaterial, insbesondere 3D-Druck, in einem Fertigungsvolumen (21) mittels wiederholtem Ausführen eines Fertigungszyklus mit
□ Bereitstellen des metallhaltigen Fertigungsmaterials in definierter Menge und Position, und
□ zumindest partiellem, positionsgenauem Umformen des bereitgestellten Fertigungsmaterials, insbesondere durch partielles Aufschmelzen des Fertigungsmaterials,
• einem Erzeugen einer fertigungsbezogenen Fertigungsinformation während zumindest einem Teil des additiven Fertigens, wobei die Fertigungsinformation erzeugt wird durch
• Erzeugen und Emittieren eines Projektionslichts ausserhalb des Fertigungsvolumens (21),
• via zumindest eines Transmissionsbereichs (22,22a,22b) des Fertigungsvolumens (21)
□ ein Projizieren des Projektionslichts auf eine Fertigungsfläche (23) in dem Fertigungsvolumen (21) und
□ - ausserhalb des Fertigungsvolumens (21) - ein erstes Erfassen eines ersten Bildes mit zumindest einem Teil der Projektion des Projektionslichts und
□ ein Ableiten der Fertigungsinformation basierend auf dem erfassten ersten Bild,
wobei ein Anpassen des additiven Fertigens des Objekts basierend auf der Fertigungsinformation während des Fertigungszyklus oder zwischen zwei Fertigungszyklen erfolgt,
wobei
• das Erzeugen einer fertigungsbezogenen Fertigungsinformation mit einem - ausserhalb des Fertigungsvolumens (21) - zweiten Erfassen eines zweiten Bildes mit zumindest einem Teil der Projektion des Projektionslichts erfolgt, wobei
□ im ersten Bild und im zweiten Bild ein gemeinsamer Teil der Projektion erfasst ist,
□ das Projizieren, das erste Erfassen und das zweite Erfassen mit bekannter Positionsrelation erfolgen und
□ ein Ableiten der Fertigungsinformation basierend auf dem erfassten ersten und erfassten zweiten Bild unter Berücksichtigung der bekannten Positionsrelation erfolgt,
• basierend auf dem erfassten ersten und erfassten zweiten Bild eine dreidimensionale Repräsentation bezüglich der Fertigungsfläche (23) als die Fertigungsinformation abgeleitet wird, insbesondere wobei die dreidimensionale Repräsentation eine 3D Punktwolke ist, insbesondere wobei die dreidimensionale Repräsentation zumindest einen Teil des zu fertigenden Objekts umfasst, und
• das Projektionslicht als Sequenz unterschiedlicher Muster erzeugt wird, und die dreidimensionale Repräsentation anhand der Sequenz unterschiedlicher Muster abgeleitet wird,
**dadurch gekennzeichnet, dass**
• das Fertigungsvolumen (21) thermisch isoliert und der Transmissionsbereich als Transmissionsfenster (22,22a,22b) ausgebildet ist.

8. Messverfahren nach Anspruch 7,
**dadurch gekennzeichnet, dass**
die dreidimensionale Repräsentation erzeugt wird durch
• Identifizieren von Merkmalen in dem Fertigungsvolumen (21) in dem ersten und zweiten Bild,
• Bestimmen jeweils gleicher Merkmale in dem ersten und zweiten Bild und jeweiliger Bildpositionen der Merkmale in dem ersten und zweiten Bild und
• Ableiten einer dreidimensionalen Position der Merkmale anhand der Bildpositionen.

9. Messverfahren nach einem der Ansprüche 7 bis 8,
**dadurch gekennzeichnet, dass**
• eine in einer bekannten Positionsrelation zur Fertigungsfläche (23) vorgesehene Markierung (25) in dem ersten und/oder dem zweiten Bild erfasst ist und eine Bildposition der erfassten Markierung (25) im ersten und/oder im zweiten Bild beim Ableiten der Fertigungsinformation verarbeitet wird, insbesondere wobei
□ anhand eines Vergleichs der bekannten Positionsrelation mit der Position der erfassten Markierung (25) im ersten bzw. im zweiten Bild eine Temperaturinformation für das Fertigungsvolumen abgeleitet wird und/oder
□ anhand eines Vergleichs der bekannten Positionsrelation mit der Bildposition der erfassten Markierung (25) im ersten bzw. im zweiten Bild ein interner und/oder externer Kameraparameter, insbesondere eine Kameraposition, für eine zur Erfassung des ersten bzw. zweiten Bildes vorgesehene Kamera abgeleitet oder aktualisiert wird,
und/oder
• im Rahmen des additiven Fertigens eine definierte Kontrollstruktur aufgebaut wird und die Fertigungsinformation mit Bezug zu der Kontrollstruktur erzeugt wird.

10. Messverfahren nach einem der Ansprüche 7 bis 9,
**dadurch gekennzeichnet, dass**
nach Ausführen eines Fertigungszyklus eine Positionsvariieren, insbesondere Absenken, der Fertigungsfläche (23) erfolgt, wobei
• ein gemessenes Ausmass des Positionsvariierens beim Ableiten der Fertigungsinformation verarbeitet wird oder
• das Positionsvariieren basierend auf einer bezüglich des Ausmasses der Positionsvariation abgeleiteten Fertigungsinformation angepasst wird.

## Claims

1. System (1) for monitored additive manufacturing of an object, comprising
• a manufacturing unit (20), in particular a 3D printer, which is designed for additive manufacturing of the object based on metal-containing manufacturing material, in particular powdered, granulated, and/or wire-shaped manufacturing material, in a manufacturing volume (21), wherein the object can be built up in a manufacturing cycle by means of repeated
□ layer-by-layer provision of the metal-containing manufacturing material in a defined quantity, and
□ at least partial, accurately-positioned forming of the provided manufacturing material, in particular by partial melting of the manufacturing material,
• an optical checking unit (10) comprising at least
□ one projector (11) and
□ a first camera (15a) and
• a control and processing unit, which is designed at least for controlling the manufacturing unit (20),
wherein
• the manufacturing volume (21) comprises at least one optical transmission region (22, 22a, 22b),
• the projector (11) and the first (15a) camera (15b) are arranged outside the manufacturing volume (21) and are aligned in such a way that
□ respective optical axes (12, 12a, 12b) defined by the first camera (15a, 15b) and the projector (11) each extend through at least one transmission region (22, 22a, 22b),
□ a projection can be generated on a manufacturing area (23) inside the manufacturing volume (21) by means of the projector (11) and
□ at least a part of the manufacturing area (23) on which the projection can be overlaid can be captured by means of the first camera (15a, 15b), and
□ an item of manufacturing information with respect to the manufacturing area and/or with respect to the provided and/or formed manufacturing material can be generated based on the capture of the projection,
• the manufacturing information is transferable to the control and processing unit and
• the control and processing unit is designed to receive and process the manufacturing information and to adapt the control of the manufacturing unit (20) based on the manufacturing information during the manufacturing cycle or between two manufacturing cycles,
• the optical checking unit (10) comprises a second camera (15b) and
• the second camera (15b) is arranged outside the manufacturing volume (21) and is aligned in such a way that
□ respective optical axes (12, 12a, 12b) defined by the first and the second camera (15a, 15b) and the projector (11) each extend through a transmission region (22, 22a, 22b) and
□ at least a common part of the manufacturing area (23) on which the projection can be overlaid can be captured in each case by the first and the second camera (15a, 15b),
• the control and processing unit comprises a measuring functionality, upon the execution of which at least
□ a first capture of a first image using the first camera (15a),
□ a second capture of a second image using the second camera (15b), and
□ a derivation of the manufacturing information based on the captured first and captured second image, in particular based on the common part captured in the images of the manufacturing area (23) on which the projection can be overlaid, and in consideration of the known position relationship, are carried out,
□ based on the captured first and captured second image, a three-dimensional representation with respect to the manufacturing area (23) and/or with respect to the provided and/or formed manufacturing material is derived as the manufacturing information, in particular wherein the three-dimensional representation is a 3D point cloud,
• the projection light is generated as a sequence of different patterns, and the three-dimensional representation is derived on the basis of the sequence of different patterns,
**characterized in that**
• the manufacturing volume (21) is designed as thermally insulated and the transmission region is designed as a transmission window (22, 22a, 22b).

2. System (1) according to Claim 1,
**characterized in that**
at least the first and/or the second camera (15a, 15b), in particular the projector (11), is configured
• in a fixed position relationship to the manufacturing volume (21) and/or
• fulfilling the Scheimpflug condition with respect to the capture of the manufacturing area (23) using the camera (15a, 15b) or the projection on the manufacturing area (23) using the projector (11), respectively.

3. System (1) according to Claim 1 or 2,
**characterized in that**
• the derivation of the manufacturing information takes place by means of image processing and/or
• during the capture of the first and the second image, a projection of projection light onto the manufacturing area (23) takes place.

4. System (1) according to any one of Claims 1 to 3,
**characterized in that**
the manufacturing information represents an item of information with respect to
• a mean layer thickness of one or more individual layers of the provided and/or formed manufacturing material or
• a layer thickness variation in the region of the manufacturing area (23) or
• a geometry growth of the object due to application of a specific number of individual layers or
• a surface roughness of the object,
in particular wherein the manufacturing information is derivable by means of a comparison of optical measurement data for two or more successively applied layers, in particular wherein a lowering of the manufacturing area is taken into consideration.

5. System (1) according to any one of Claims 1 to 4,
**characterized in that**
• a temperature of at least one of the cameras (15a, 15b) can be actively regulated by means of the control and processing unit, wherein a ventilation and/or a Peltier element is provided and is controllable by means of the control and processing unit,
and/or
• the first and the second camera (15a, 15b) and the projector (11) are arranged on a frame and a temperature of the frame can be actively regulated by means of the control and processing unit, in particular wherein the frame is designed as a hollow frame and a ventilation element is provided for the internal ventilation of the frame.

6. System (1) according to any one of Claims 1 to 5,
**characterized in that**
• at least one of the optical axes (12, 12a, 12b) is aligned orthogonally to the at least one optical transmission region,
and/or
• the manufacturing volume (21) comprises three optical transmission windows (22, 22a, 22b) and each one of the optical axes (12, 12a, 12b) is assigned to one of the transmission windows (22, 22a, 22b), in particular wherein the optical axes (12, 12a, 12b) each extend orthogonally through the assigned transmission window (22, 22a, 22b),
and/or
• the system comprises at least one aperture usable as a shutter, which interacts with one of the optical axes (12, 12a, 12b) of the camera or the projector in such a way that a transmission of electromagnetic radiation, in particular infrared radiation, into the camera or into the projector, respectively, can be blocked, in particular wherein the aperture is arranged in the manufacturing volume.

7. Measuring method for and using an additive manufacturing process of an object, comprising
• additive manufacturing of the object using metal-containing manufacturing material, in particular powdered, granulated, and/or wire-shaped manufacturing material, in particular 3D printing, in a manufacturing volume (21) by means of repeated execution of a manufacturing cycle comprising
□ providing the metal-containing manufacturing material in a defined quantity and position, and
□ at least partial, accurately-positioned forming of the provided manufacturing material, in particular by partial melting of the manufacturing material,
• generating an item of manufacturing-related manufacturing information during at least a part of the additive manufacturing,
wherein
the manufacturing information is generated by
• generating and emitting a projection light outside the manufacturing volume (21),
• via at least one transmission region (22, 22a, 22b) of the manufacturing volume (21)
□ projecting of the projection light onto a manufacturing area (23) in the manufacturing volume (21) and
□ - outside the manufacturing volume (21)- a first capture of a first image using at least a part of the projection of the projection light and
□ a derivation of the manufacturing information based on the captured first image,
wherein an adaptation of the additive manufacturing of the object is carried out based on the manufacturing information during the manufacturing cycle or between two manufacturing cycles,
wherein
• the generation of an item of manufacturing-related manufacturing information is carried out using a second capture - outside the manufacturing volume (21) - of a second image using at least a part of the projection of the projection light, wherein
□ a common part of the projection is captured in the first image and in the second image,
□ the projection, the first capture, and the second capture take place using a known position relationship, and
□ a derivation of the manufacturing information is carried out based on the captured first and captured second image in consideration of the known position relationship
• based on the captured first and captured second image, a three-dimensional representation with respect to the manufacturing area (23) is derived as the manufacturing information, in particular wherein the three-dimensional representation is a 3D point cloud, in particular wherein the three-dimensional representation comprises at least a part of the object to be manufactured,
• the projection light is generated as a sequence of different patterns, and the three-dimensional representation is derived on the basis of the sequence of different patterns,
**characterized in that**
• the manufacturing volume (21) is designed as thermally insulated and the transmission region is designed as a transmission window (22, 22a, 22b).

8. Measuring method according to claim 7,
**characterized in that**
the three-dimensional representation is generated by
• identifying features in the manufacturing volume (21) in the first and second image,
• determining respective identical features in the first and second image and respective image positions of the features in the first and second image, and
• deriving a three-dimensional position of the features on the basis of the image positions.

9. Measuring method according to any one of Claims 7 to 8, **characterized in that**
• a marking (25) provided in a known position relationship to the manufacturing area (23) is captured in the first and/or the second image and an image position of the captured marking (25) in the first and/or in the second image is processed during the derivation of the manufacturing information, in particular wherein
□ an item of temperature information for the manufacturing volume is derived on the basis of a comparison of the known position relationship to the position of the captured marking (25) in the first and/or in the second image and/or
□ an internal and/or external camera parameter, in particular a camera position, for a camera provided for the capture of the first and/or the second image is derived or updated on the basis of a comparison of the known position relationship to the image position of the captured marking (25) in the first and/or in the second image,
and/or
• in the scope of the additive manufacturing, a defined monitoring structure is built up and the manufacturing information is generated with reference to the monitoring structure.

10. Measuring method according to any one of Claims 7 to 9, **characterized in that**
after execution of a manufacturing cycle, a position variation, in particular lowering, of the manufacturing area (23) takes place, wherein
• a measured extent of the position variation is processed during the derivation of the manufacturing information or
• the position variation is adapted based on an item of manufacturing information derived with respect to the extent of the position variation.

## Revendications

1. Système (1) de fabrication additive surveillée d'un objet, comprenant
• une unité de fabrication (20), en particulier une imprimante 3D, qui est conçue pour la fabrication additive de l'objet sur la base d'un matériau de fabrication contenant du métal, en particulier d'un matériau de fabrication en poudre, en granulés et/ou en forme de fil, dans un volume de fabrication (21), dans lequel l'objet peut être construit dans un cycle de fabrication au moyen d'opérations répétées suivantes
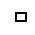 l'apport couche par couche du matériau de fabrication contenant du métal en une quantité définie, et
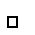 la mise en forme au moins partielle et précise en position du matériau de fabrication fourni, en particulier par fusion partielle du matériau de fabrication,
• une unité de vérification optique (10) comprenant au moins
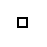 un projecteur (11) et
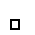 une première caméra (15a) et
• une unité de commande et de traitement, qui est conçue au moins pour commander l'unité de fabrication (20),
dans lequel
• le volume de fabrication (21) comprend au moins une région de transmission optique (22, 22a, 22b),
• le projecteur (11) et la première (15a) caméra (15b) sont agencés à l'extérieur du volume de fabrication (21) et sont alignés de telle sorte que
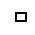 des axes optiques respectifs (12, 12a, 12b) définis par la première caméra (15a, 15b) et le projecteur (11) s'étendent chacun à travers au moins une région de transmission (22, 22a, 22b),
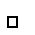 une projection peut être générée sur une zone de fabrication (23) à l'intérieur du volume de fabrication (21) au moyen du projecteur (11) et
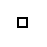 au moins une partie de la zone de fabrication (23) sur laquelle la projection peut être superposée peut être capturée au moyen de la première caméra (15a, 15b), et
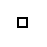 un élément d'information de fabrication concernant la zone de fabrication et/ou concernant le matériau de fabrication fourni et/ou formé peut être généré sur la base de la capture de la projection,
• les informations de fabrication peuvent être transférées à l'unité de commande et de traitement, et
• l'unité de commande et de traitement est conçue pour recevoir et traiter les informations de fabrication et pour adapter la commande de l'unité de fabrication (20) sur la base des informations de fabrication pendant le cycle de fabrication ou entre deux cycles de fabrication,
• l'unité de vérification optique (10) comprend une deuxième caméra (15b) et
• la deuxième caméra (15b) est agencée à l'extérieur du volume de fabrication (21) et est alignée de telle sorte que
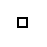 les axes optiques respectifs (12, 12a, 12b) définis par la première et la deuxième caméra (15a, 15b) et le projecteur (11) s'étendent chacun à travers une région de transmission (22, 22a, 22b) et
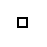 au moins une partie commune de la zone de fabrication (23) sur laquelle la projection peut être superposée peut être capturée dans chaque cas par la première et la deuxième caméra (15a, 15b),
• l'unité de commande et de traitement comprend une fonctionnalité de mesure, lors de l'exécution de laquelle au moins
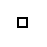 une première capture d'une première image à l'aide de la première caméra (15a),
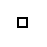 une deuxième capture d'une deuxième image à l'aide de la deuxième caméra (15b), et
une dérivation des informations de fabrication sur la base de la première image capturée et de la deuxième image capturée, en particulier sur la base de la partie commune capturée dans les images de la zone de fabrication (23) sur laquelle la projection peut être superposée, et en tenant compte de la relation de position connue, sont réalisées,
• sur la base de la première image capturée et de la deuxième image capturée, une représentation tridimensionnelle concernant la zone de fabrication (23) et/ou concernant le matériau de fabrication fourni et/ou formé est dérivée en tant qu'information de fabrication, en particulier dans lequel la représentation tridimensionnelle est un nuage de points 3D,
• la lumière de projection est générée sous la forme d'une séquence de différents motifs, et la représentation tridimensionnelle est dérivée sur la base de la séquence de différents motifs,
**caractérisé en ce que**
• le volume de fabrication (21) est conçu comme étant thermiquement isolé et la région de transmission est conçue comme une fenêtre de transmission (22, 22a, 22b).

2. Système (1) selon la revendication 1,
**caractérisé en ce que**
au moins la première et/ou la deuxième caméra (15a, 15b), en particulier le projecteur (11), sont configurés
• dans une relation de position fixe par rapport au volume de fabrication (21) et/ou
• pour remplir la condition Scheimpflug concernant la capture de la zone de fabrication (23) à l'aide de la caméra (15a, 15b) ou la projection sur la zone de fabrication (23) à l'aide du projecteur (11), respectivement.

3. Système (1) selon la revendication 1 ou 2,
**caractérisé en ce que**
• la dérivation des informations de fabrication s'effectue au moyen d'un traitement d'image et/ou
• pendant la capture de la première et de la deuxième image, une projection de lumière de projection sur la zone de fabrication (23) a lieu.

4. Système (1) selon l'une quelconque des revendications 1 à 3,
**caractérisé en ce que**
les informations de fabrication représentent un élément d'information concernant
• une épaisseur moyenne de couche d'une ou de plusieurs couches individuelles du matériau de fabrication fourni et/ou formé ou
• une variation d'épaisseur de couche dans la région de la zone de fabrication (23) ou
• une croissance de géométrie de l'objet due à l'application d'un nombre spécifique de couches individuelles ou
• une rugosité de surface de l'objet,
en particulier dans lequel les informations de fabrication peuvent être dérivées au moyen d'une comparaison de données de mesure optique pour deux couches appliquées successivement ou plus, en particulier dans lequel un abaissement de la zone de fabrication est pris en compte.

5. Système (1) selon l'une quelconque des revendications 1 à 4,
**caractérisé en ce que**
• une température d'au moins une des caméras (15a, 15b) peut être activement régulée au moyen de l'unité de commande et de traitement, dans lequel une ventilation et/ou un élément Peltier sont prévus et peuvent être commandés au moyen de l'unité de commande et de traitement,
et/ou
• la première et la deuxième caméra (15a, 15b) et le projecteur (11) sont agencés sur un cadre et une température du cadre peut être activement régulée au moyen de l'unité de commande et de traitement, en particulier dans lequel le cadre est conçu comme un cadre creux et un élément de ventilation est prévu pour la ventilation intérieure du cadre.

6. Système (1) selon l'une quelconque des revendications 1 à 5,
**caractérisé en ce que**
• au moins un des axes optiques (12, 12a, 12b) est aligné orthogonalement à l'au moins une région de transmission optique,
et/ou
• le volume de fabrication (21) comprend trois fenêtres de transmission optique (22, 22a, 22b) et chacun des axes optiques (12, 12a, 12b) est affecté à l'une des fenêtres de transmission (22, 22a, 22b), en particulier dans lequel les axes optiques (12, 12a, 12b) s'étendent chacun orthogonalement à travers la fenêtre de transmission (22, 22a, 22b) affectée,
et/ou
• le système comprend au moins une ouverture utilisable comme un obturateur, qui interagit avec l'un des axes optiques (12, 12a, 12b) de la caméra ou du projecteur de telle sorte qu'une transmission de rayonnement électromagnétique, en particulier de rayonnement infrarouge, dans la caméra ou dans le projecteur, respectivement, soit bloquée, en particulier dans lequel l'ouverture est agencée dans le volume de fabrication.

7. Procédé de mesure pour et utilisant un processus de fabrication additive d'un objet, comprenant
• la fabrication additive de l'objet à l'aide d'un matériau de fabrication contenant du métal, en particulier un matériau de fabrication en poudre, en granulés et/ou en forme de fil, en particulier l'impression 3D, dans un volume de fabrication (21) au moyen de l'exécution répétée d'un cycle de fabrication comprenant
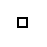 la fourniture du matériau de fabrication contenant du métal en une quantité et une position définies, et
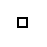 la mise en forme au moins partielle et précise en position du matériau de fabrication fourni, en particulier par fusion partielle du matériau de fabrication,
• la génération d'un élément d'information de fabrication lié à la fabrication pendant au moins une partie de la fabrication additive,
dans lequel
les informations de fabrication sont générées par
• génération et émission d'une lumière de projection à l'extérieur du volume de fabrication (21),
• via au moins une région de transmission (22, 22a, 22b) du volume de fabrication (21).
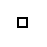 projection de lumière de projection sur une zone de fabrication (23) dans le volume de fabrication (21) et
□ - à l'extérieur du volume de fabrication (21) - une première capture d'une première image en utilisant au moins une partie de la projection de lumière de projection et
□ une dérivation des informations de fabrication sur la base de la première image capturée,
dans lequel une adaptation de la fabrication additive de l'objet est réalisée sur la base des informations de fabrication pendant le cycle de fabrication ou entre deux cycles de fabrication,
dans lequel
• la génération d'un élément d'information de fabrication lié à la fabrication est réalisée à l'aide d'une deuxième capture - en dehors du volume de fabrication (21) - d'une deuxième image en utilisant au moins une partie de la projection de lumière de projection, dans lequel
une partie commune de la projection est capturée dans la première image et dans la deuxième image,
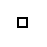 la projection, la première capture et la deuxième capture s'effectuent à l'aide d'une relation de position connue, et
une dérivation des informations de fabrication est réalisée sur la base de la première image capturée et de la deuxième image capturée en tenant compte de la relation de position connue,
• sur la base de la première image capturée et de la deuxième image capturée, une représentation tridimensionnelle concernant la zone de fabrication (23) est dérivée en tant qu'information de fabrication, en particulier dans lequel la représentation tridimensionnelle est un nuage de points 3D, en particulier dans lequel la représentation tridimensionnelle comprend au moins une partie de l'objet à fabriquer,
• la lumière de projection est générée sous la forme d'une séquence de différents motifs, et la représentation tridimensionnelle est dérivée sur la base de la séquence de différents motifs,
**caractérisé en ce que**
• le volume de fabrication (21) est conçu comme étant thermiquement isolé et la région de transmission est conçue comme une fenêtre de transmission (22, 22a, 22b).

8. Procédé de mesure selon la revendication 7,
**caractérisé en ce que**
la représentation tridimensionnelle est générée par
• identification de particularités dans le volume de fabrication (21) dans la première et la deuxième image,
• détermination de particularités identiques respectives dans la première et la deuxième image et de positions d'image respectives des particularités dans la première et la deuxième image, et
• dérivation d'une position tridimensionnelle des particularités sur la base des positions d'image.

9. Procédé de mesure selon l'une quelconque des revendications 7 à 8,
**caractérisé en ce que**
• un marquage (25) fourni dans une relation de position connue par rapport à la zone de fabrication (23) est capturé dans la première et/ou la deuxième image et une position d'image du marquage (25) capturé dans la première et/ou la deuxième image est traitée pendant la dérivation des informations de fabrication,
en particulier dans lequel
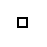 un élément d'information de température pour le volume de fabrication est dérivé sur la base d'une comparaison entre la relation de position connue et la position du marquage (25) capturé dans la première et/ou la deuxième image et/ou
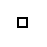 un paramètre de caméra intérieur et/ou extérieur, en particulier une position de caméra, pour une caméra fournie pour la capture de la première et/ou de la deuxième image est dérivé ou mis à jour sur la base d'une comparaison de la relation de position connue avec la position d'image du marquage (25) capturé dans la première et/ou dans la deuxième image,
et/ou
• dans la portée de la fabrication additive, une structure de surveillance définie est construite et les informations de fabrication sont générées en référence à la structure de surveillance.

10. Procédé de mesure selon l'une quelconque des revendications 7 à 9,
**caractérisé en ce que**
après l'exécution d'un cycle de fabrication, une variation de position, en particulier un abaissement, de la zone de fabrication (23) a lieu, dans lequel
• l'ampleur mesurée de la variation de position est traitée lors de la dérivation des informations de fabrication ou
• la variation de position est adaptée sur la base d'un élément d'information de fabrication dérivé concernant l'étendue de la variation de position.
